# EUROPÄISCHE PATENTSCHRIFT

(11) **EP 3 262 452 B1**
(45) Veröffentlichungstag und Bekanntmachung des Hinweises auf die Patenterteilung: **27.11.2019**
(21) Anmeldenummer: 16705965.8
(22) Anmeldetag: 24.02.2016
(51) Int. Cl.: G02B 21/00, G01J 1/42, G01J 1/44

(54) **VORRICHTUNG UND VERFAHREN ZUM DETEKTIEREN VON LICHT**
DEVICE AND METHOD FOR DETECTING LIGHT
DISPOSITIF ET PROCÉDÉ DE DÉTECTION DE LUMIÈRE

(30) Priorität: 24.02.2015 LU 92664
(43) Veröffentlichungstag der Anmeldung: 03.01.2018
(73) Patentinhaber: Leica Microsystems CMS GmbH, 35578 Wetzlar (DE)
(72) Erfinder: KREMER, Manuel, 69181 Leimen (DE); DYBA, Marcus, 69121 Heidelberg (DE)
(74) Vertreter: Bradl, Joachim
(86) Internationale Anmeldenummer: PCT/EP2016/053831
(87) Internationale Veröffentlichungsnummer: WO 2016/135177

(56) Entgegenhaltungen:
- EP-A1- 1 617 257
- EP-A1- 2 546 621
- US-A1- 2011 095 192

## Beschreibung

Die Erfindung betrifft eine Vorrichtung zum Detektieren von Licht zur Anwendung in einem Konfokalmikroskop. Des Weiteren betrifft die Erfindung ein entsprechendes Mikroskop, insbesondere Rastermikroskop, vorzugsweise Laser-Raster-Mikroskop. Ferner betrifft die Erfindung ein entsprechendes Verfahren, vorzugsweise unter Nutzung der Vorrichtung.

Licht im Sinne der Erfindung stellt jegliche elektromagnetische Strahlung dar, die durch Silizium-Photomultiplier (SiPM) bzw. Single-Photon-Avalanche-Dioden (SPAD) detektiert werden kann, insbesondere sichtbares Licht, Infrarotlicht, UV-Licht, Röntgenstrahlung und Gammastrahlung. So ist der Begriff der Lichtintensität im Rahmen dieser Anmeldung folglich ein Synonym zum Begriff der Strahlungsintensität. Beispielhaft, nicht etwa einschränkend, lässt sich die Erfindung in einem Laser-Raster-Mikroskop verwenden.

Vorrichtungen zum Detektieren von Licht sind seit vielen Jahren aus der Praxis bekannt und werden beispielsweise in Laser-Raster-Mikroskopen eingesetzt. Dabei sind entsprechende Vorrichtungen, die das Detektionssignal der zu mikroskopierenden Probe erfassen, von zentraler Bedeutung für die Bildqualität. Dies gilt vor allem für vergleichsweise schwache Detektionssignale, wie sie in der (konfokalen) Fluoreszenz-Mikroskopie, der SHG-Mikroskopie oder der Raman-Mikroskopie typisch sind.

Für Lichtdetektoren sind zwei Kenngrößen von besonderer Bedeutung, das Detektorrauschen und die Quantenausbeute, d.h. die Detektionseffizienz. Die Quantenausbeute beschreibt dabei den Anteil des auf den Detektor treffenden Lichts, der tatsächlich ein verwertbares elektrisches Signal erzeugt. Das Rauschen beschreibt das elektronische Grundsignal, das dem eigentlichen Detektionssignal störend überlagert ist. Das Verhältnis dieser beiden Größen, das sogenannte Signal-Rausch-Verhältnis (SRN, "Signal to Noise Ratio") ist eine der zentralen Kenngrößen eines Lichtdetektors.

In der Praxis sind seit vielen Jahren Fotomultiplier (PMT) die dominierenden Lichtdetektoren in der Laser-Raster-Mikroskopie. Im Vergleich zu halbleiterbasierten Detektoren - z.B. Fotodioden - haben PMT eine geringere Quantenausbeute. Sie bieten aufgrund ihres geringen Rauschens jedoch ein sehr gutes SNR. Des Weiteren sind in den letzten Jahren verbesserte Varianten mit einer GaAsP-Schicht (Galliumarsenidphosphid) als lichtempfindliches Medium verfügbar.

Ferner ist seit einigen Jahren bekannt, alternativ Halbleiter-Detektoren in der Fluoreszenz-Mikroskopie einzusetzen. Dabei spielen vor allem Einzelphoton-Lawinendioden, sog. "Single-Photon-Avalanche-Dioden" (SPAD) eine große Rolle. Die SPADs arbeiten im Geigermodus.

Dabei wird eine Sperrspannung an die SPADs angelegt, die knapp oberhalb der Durchbruchspannung liegt. Die Durchbruchspannung beträgt dabei einige hundert Volt.

In diesem Modus erzeugt ein absorbiertes Photon ein Elektron-Loch-Paar im Halbleiter, das durch das starke elektrische Feld beschleunigt wird und weitere Stoß-Ionisationen durchführt. Dieser Prozess setzt sich lawinenartig fort und löst eine messbare Ladungslawine aus, die um einen Faktor von einigen Millionen verstärkt ist. Somit können einzelne absorbierte Photonen gemessen werden, wodurch diese Detektoren für die Messung extrem geringer Lichtmengen eingesetzt werden können, wie sie beispielsweise in der Fluoreszenz-Mikroskopie üblich sind.

Ein einzelnes Photon führt dabei zu einer elektrischen Entladung, die in Form eines kurzen Spannungspulses gemessen wird. Es gibt dabei grundsätzlich zwei Mess-Modi. Im digitalen Messmodus werden die Spannungspulse gezählt, wobei die steigende Spannungsflanke als auslösendes Zählsignal dient. Alternativ kann die Ladung im sog. analogen Messmodus über einen Messwiderstand integriert und die gesammelte Ladungsmenge aller Pulse als Messsignal genutzt werden. Typischerweise wird die integrierte Ladungsmenge aller Pulse eines festgelegten Zeitintervalls (Pixel-Belichtungszeit) dann durch einen Analog-DigitalWandler digitalisiert zur weiteren digitalen Verarbeitung.

Unabhängig von dem gewählten Messmodus ist bei den SPADs problematisch, dass eine Sättigung des Signals auftritt. Im Konkreten steigt dabei das Messsignal bei einer zunehmenden Lichtmenge, die auf den Detektor trifft, nicht mehr im gleichen Maße an. Der gewünschte lineare Zusammenhang zwischen Ein- und Ausgangssignal ist somit nicht mehr gegeben. Die Sättigung tritt auf, da während einer Lawinenentladung der SPADs ein weiteres absorbiertes Photon keine gleichzeitige, zweite Lawine auslösen kann. Somit besteht nach einer Pulsauslösung eine Totzeit der SPADs, in der eine Detektion nicht erfolgen kann. Diese Totzeit entspricht der Zeit, die benötigt wird, um die während der Lawinenentladung verarmten Ladungsträger im Halbleiter wieder aufzuladen. Große Lichtmengen, bei denen mehrere Photonen innerhalb der Totzeit eintreffen, können daher nicht mehr vollständig erfasst werden und der Detektor zeigt eine nicht-lineare Sättigungskennkurve.

Da der daraus resultierende geringe Dynamikbereich der Detektoren mit einer maximalen Zählrate von einigen 10⁶ bis 10⁷ Photonen pro Sekunde ein Problem dieser hochempfindlichen Detektoren darstellt, wurden in den letzten Jahren sog. SPAD-Arrays entwickelt. Diese sind bspw. von dem Hersteller Hamamatsu Photonics K.K. unter dem Namen MPPC-Detektor (Multi-Pixel Photon Counting Detector) verfügbar. In der Literatur werden diese Detektoren u.a. auch als Silizium Fotomultiplier (SiPM) bezeichnet. Die Funktion entsprechender Detektoren ist beispielsweise unter https://www.hamamatsu.com/resources/pdf/ssd/mppc_techinfo_e.pdf beschrieben.

Das Grundprinzip eines SPAD-Arrays besteht darin, dass mehrere einzelne SPADs zu einem Feld parallel zusammengeschaltet sind. Trifft ein Photon auf eine einzelne SPAD, so ist diese aufgrund ihrer Totzeit für eine Zeit von typischerweise einigen Nanosekunden nicht mehr empfindlich. Andere SPADs, auf die ein weiteres Photon innerhalb dieser Zeit oder auch gleichzeitig auftrifft, können dieses jedoch erfassen und einen messbaren Ladungsimpuls erzeugen. Folglich kann am Detektorausgang eine Pulsfolge mit höherer Zählrate entstehen als bei einem einzelnen SPAD.

Somit ist aus dem Stand der Technik bekannt, das gesamte Detektionslicht auf mehrere, parallel geschaltete SPADs zu verteilen. Dies hat den Vorteil, dass einzelne SPADs nur mit einem Bruchteil des Detektionslichts beaufschlagt werden und die Sättigung dieser SPADs somit später eintritt. Des Weiteren stehen während der Totzeit einer individuellen SPAD weitere empfangsbereite SPADs zur Verfügung. Der Dynamikbereich dieser Detektoren ist daher wesentlich erhöht, abhängig von der Anzahl der parallel geschalteten SPADs. Kommerziell erhältliche SPAD-Arrays weisen beispielsweise 20x20 oder mehr SPADs auf.

Jedoch ist auch bei den bekannten SPAD-Arrays problematisch, dass diese ein Sättigungsverhalten aufweisen. Sättigung kann eintreten, wenn zu viele Photonen innerhalb der Totzeit auf dieselbe SPAD treffen. In diesem Fall ist die Sättigung analog zur Sättigung einer einzelnen SPAD. Ferner kann im digitalen Detektionsmodus auch eine Sättigung auftreten, wenn die - steigenden - Auslöseflanken eines Pulses während eines vorigen Pulses nicht zum erneuten Auslösen des digitalen Zählers führen, da ihr Spannungsniveau über der Spannungsschwelle zur Zählerauslösung liegt - sog. Trigger-Level - und daher von der Zähleinheit nicht als Pulsflanke erfasst wird.

Beide genannten Effekte führen zu einer Sättigung auch von SPAD-Arrays. Aus der Praxis ist bekannt, dass beispielsweise ab ca. 10⁸ auftreffenden Photonen pro Sekunde das Ausgangssignal - die Anzahl der elektrischen Entladungen - einen nahezu konstanten Wert annimmt, so dass eine Messung der Lichtmenge nicht mehr präzise möglich ist. Sofern die Kennkurve - spezifisch für ein gegebenes Detektordesign - bekannt ist, kann sie durch rechnerische Korrektur linearisiert werden. Im Bereich fast vollständiger Sättigung - beispielsweise etwas oberhalb von 10¹¹ Photonen pro Sekunde - ist eine rechnerische Korrektur jedoch nicht mehr präzise genug möglich. Da eine Kennkurve im analogen Messmodus einen nahezu identischen Verlauf wie im digitalen Messmodus aufzeigt, wird im Folgenden nicht mehr zwischen den verschiedenen Sättigungsursachen unterschieden.

Das parallele Zusammenschalten vieler SPADs zu einem SPAD-Array stellt daher zwar eine Verbesserung der Sättigungsproblematik dar, diese ist jedoch nach wie vor vorhanden. Somit liegt der Dynamikbereich bekannter SPAD-Arrays immer noch weiter unter dem Dynamikbereich von Fotomultipliern, die daher nach wie vor zur Detektion geringer Lichtmengen eingesetzt werden, obwohl ihre Detektionseffizienz schlechter ist als die von SPAD-Detektoren.

Der vorliegenden Erfindung liegt daher die Aufgabe zugrunde, eine Vorrichtung zum Detektieren von Licht und ein entsprechendes Verfahren anzugeben, wonach bei hoher Empfindlichkeit, optimiertem Signal-zu-Rauschen-Verhältnis und geringen Herstellungskosten eine Vergrößerung des effektiven Dynamikbereichs und der Detektionseffizienz sowie eine Linearisierung der Kennkurve realisierbar ist. Ein entsprechend ausgestattetes Mikroskop soll angegeben werden.

Voranstehende Aufgabe ist in Bezug auf die erfindungsgemäße Vorrichtung durch die Merkmale des Anspruchs 1 gelöst. In Bezug auf das erfindungsgemäße Mikroskop ist die Aufgabe durch die Merkmale des nebengeordneten Anspruchs 12 gelöst. Mit dem weiter nebengeordneten Anspruch 14 ist ein entsprechendes Verfahren angegeben.

Erfindungsgemäß ist die Vorrichtung zum Detektieren von Licht zur Anwendung in einem Konfokalmikroskop, mit mindestens einem Silicium-Photomultiplier (SiPM) und einer Optik ausgestattet. Der SiPM weist eine aus einer Anordnung (Array) mehrere Single-Photon-Avalanche-Dioden (SPAD) gebildete Detektionsfläche auf. Erfindungswesentlich ist dabei, dass die Optik das Licht derart formt, dass die Detektionsfläche mit einem Lichtstrahlbereich nahezu konstanter Intensität möglichst vollständig bedeckt ist.

An dieser Stelle sei zunächst darauf hingewiesen, dass die Begriffe "Licht", "Lichtstrahl", "Detektionslicht" und "Detektionslichtstrahl" synonym verwendet werden.

Erfindungsgemäß ist erkannt worden, dass die zugrundeliegende Aufgabe durch eine geschickte Formung des zu detektierenden Lichtstrahls in verblüffend einfacher Weise gelöst werden kann. Die nach dem Stand der Technik bekannten SPAD-Arrays werden in der (konfokalen) Laser-Raster-Mikroskopie bisher so eingesetzt, dass das Detektionslicht hinter der konfokalen Lochblende mit klassischen Optikelementen auf die Detektorfläche fokussiert wird. Das hinter der Lochblende divergent austretende Licht wird mittels Linsen auf den Detektor abgebildet, so dass eine gaußartige Lichtverteilung (genauer eine Airy-Verteilung) auf der Detektoroberfläche entsteht. Dabei ist wesentlich, dass nahezu das gesamte Licht auf die Detektionsfläche und nur vernachlässigbar wenig Licht neben die Detektionsfläche trifft. Dies ist erforderlich, um eine hohe Detektionseffizienz zu erzielen. Bei gaußartiger Verteilung des Detektionslichts trifft als Konsequenz eine deutlich geringere Lichtintensität auf die außen liegenden SPADs im Vergleich zu den im zentralen Bereich der Detektionsfläche liegenden SPADs. Beispielsweise werden die äußeren SPADs mit weniger als 10% der Zentralintensität (der Lichtintensität im geometrischen Mittelpunkt des SPAD-Arrays) beleuchtet. Die nächsten, weiter innen liegenden SPADs werden beispielsweise nur mit etwa 31% der Zentralintensität beleuchtet. In erfindungsgemäßer Weise ist dabei erkannt worden, dass die inneren SPADs deutlich früher einen Sättigungseffekt als die außenliegende SPADs zeigen. Somit zeigt der entsprechend beleuchtete Detektor schon bei geringen Gesamtlichtmengen eine nicht-lineare Kennkurve.

Erfindungsgemäß ist nunmehr erkannt worden, dass eine verbesserte Linearisierung der Kennkurve über einen größeren Dynamikbereich möglich ist, wenn das Detektionslicht räumlich so strukturiert ist, dass die einzelnen SPADs des Detektors möglichst homogen, also mit möglichst gleicher Lichtintensität, beleuchtet werden.

In erfindungsgemäßer Weise erfolgt die entsprechende Beleuchtung der Detektionsfläche durch eine Optik, mit der die Detektionsfläche mit möglichst homogener Lichtverteilung beleuchtbar ist. Somit wird mit konstruktiv einfachen Mitteln ein verfrühtes Sättigen des Detektors aufgrund überdurchschnittlich hoher Lichtintensitäten einzelner Bereiche des Arrays effektiv vermieden. Dies führt in idealer Weise zu einem linearen Kennkurvenverhalten über einen möglichst großen Dynamikbereich.

In erfindungsgemäßer Weise ist die Optik als eine sog. Flat-Top-Optik ausgebildet. Dies bezeichnet eine Optik, die - bezogen auf einen Strahlquerschnitt - ein Strahlprofil (bspw. ein gauß'sches Strahlprofil) abflacht, also einen Bereich bzw. Region relativ gleichmäßiger Lichtintensität bzw. Energiedichte erzeugt. Ein solches Strahlprofil zeichnet sich dadurch aus, dass es radial vom Strahlmittelpunkt über einen großen Bereich konstant oder nahezu konstant bleibt und dann in einem Randbereich schnell mit steiler Flanke abfällt. Es entsteht dadurch ein Lichtstrahl mit im Wesentlichen konstanter Beleuchtungsstärke im Zentralbereich. Ein solches Strahlprofil wird Flat-Top-Strahlprofil genannt, der entsprechende Strahl wird auch als "top-hat beam" bezeichnet. Entsprechende optische Elemente zur räumlichen Laserstrahlformung, die das Strahlprofil eines Laserstrahls modifizieren, werden bereits in der Materialbearbeitung eingesetzt. Beispielsweise sind Strahlformoptiken ("beam shaper") bekannt, die ein gauß'sches Laserstrahlprofil in ein solches Flat-Top-Strahlprofil umformen (also den Strahl zu einem "top-hat beam" formen).

Dabei kann die Flat-Top-Optik als diffraktive Optik, beispielsweise als Beugungsgitter, oder als refraktive Optik, beispielsweise umfassend mindestens eine asphärische Linse und/oder mindestens eine Freiformlinse, oder als Reflexionsoptik, beispielsweise als nicht-sphärischer Spiegel, ausgebildet sein. Eine entsprechende refraktive Strahlformungsoptik, die einen einfallenden gaußförmigen Lichtstrahl in einen flachen, nahezu eckigen austretenden Lichtstrahl umwandelt, ist beispielsweise in F. Duerr, H. Thienpont, Optics Express, Vol. 22 Issue 7, pp. 8001-8011 (2014) beschrieben. Des Weiteren ist eine entsprechende Optik in der US 6,295,168 beschrieben.

In weiter vorteilhafter Weise kann die Flat-Top-Optik eine erste Linse und eine zweite Linse aufweisen, wobei die erste Linse und die zweite Linse als asphärische Linse oder als Freiformlinse ausgebildet sein können und wobei die erste Linse ein radiales Profil des Lichts verzerren und die zweite Linse das Licht kollimieren kann. Dabei kann die mindestens eine Linse der Flat-Top-Optik auf einer Linsenoberfläche eine Antireflexionsschicht aufweisen. In besonders vorteilhafter Weise kann es sich um eine spektral breitbandige Antireflexionsschicht handeln.

Des Weiteren kann die Optik ein pyramidenförmiges oder polyederförmiges Bauteil, insbesondere einen Glasblock oder einen Polymerblock, und eine fokussierende Linse beinhalten. Durch eine entsprechende Anordnung entstehen seitlich versetzt zueinander mehrere gaußartige Lichtstrahlprofile - im Falle eines pyramidenförmigen Bauteils beispielsweise vier gaußartige Lichtstrahlprofile.

In weiterer vorteilhafter Weise kann die Flat-Top-Optik ein Mikrolinsenarray beinhalten, das den Strahl in einer gewünschten Weise formt. Der Einsatz eines Mikrolinsenarrays zur Formung eines Flat-Top-Strahlprofiles ist für andere technische Gebiete aus dem Stand der Technik bekannt, siehe hierzu beispielsweise O. Homburg, D. Hauschild, F. Kubacki, V. Lissotschenko, Laser Technik Journal, Vol. 4 Issue 1, pp. 44-47, 2007. Für ein solches Mikrolinsenarray ist es vorstellbar, dass alle oder ein Teil der Mikrolinsen eine Antireflexionsschicht aufweisen. In besonders vorteilhafter Weise kann es sich um eine spektral breitbandige Antireflexionsschicht handeln.

In besonders vorteilhafter Weise kann die Optik das Licht derart formen, dass der Bereich nahezu konstanter Intensität eine zumindest nahezu runde, rechteckige, insbesondere nahezu quadratische, Form aufweist. Je nach Geometrie der Detektorfläche kann die Optik derart angepasst sein, dass eine möglichst homogene Ausleuchtung der Detektorfläche gewährleistet ist. Entsprechende Flat-Top-Optiken, die das Licht nahezu quadratisch formen, werden beispielsweise von der Firma TOPAG Lasertechnik GmbH (Darmstadt) hergestellt und sind in Stefan Rung et al., Proceedings SPIE Photonics West 2014, LASE, LAMON XIX, "Laser Thin Film Ablation with Multiple Beams and Tailored Beam Profiles", Paper 8967-24 beschrieben.

In besonders vorteilhafter Weise können die SPADs derart ausgebildet und/oder angeordnet sein, dass die Detektionsfläche eine runde oder zumindest annähernd runde Form oder eine rechteckige, insbesondere eine quadratische, Form aufweist.

Ferner kann der Silicium-Photomultiplier als Zeilen-Detektor ausgebildet sein. Dabei kann der Zeilen-Detektor mindestens zwei einzelne Arrays aus mehreren SPADs mit jeweils mindestens zwei Signal-Ausgängen umfassen. Bei einer Ausbildung des Silicium-Photomultipliers als Zeilen-Detektor kann in besonders vorteilhafter Weise zwischen der Optik und dem Zeilen-Detektor ein dispersives Element, beispielsweise ein Prisma und/oder eine Zylinderlinse, angeordnet sein. Durch diese Anordnung wird das zu detektierende Licht in ein flaches Linienprofil verformt, das relativ scharfe Kanten und eine homogene Intensitätsverteilung im inneren Bereich des Linienprofils aufweist.

Eine Anwendung der erfindungsgemäßen Vorrichtung in einem Konfokalmikroskop, insbesondere einem Rastermikroskop, vorzugsweise einem Laser-Raster-Mikroskop, ist von besonderem Vorteil. Dabei kann es sich um ein Mikroskop zur Fluoreszenz-Mikroskopie und/oder zur Raman-Mikroskopie handeln. Alternativ oder zusätzlich ist denkbar, dass es sich um ein Mikroskop zur Second-Harmonic-Generation (SHG)-Mikroskopie handelt.

Zu den Merkmalen des erfindungsgemäßen Verfahrens sei zur Vermeidung von Wiederholungen auf die Ausführungen der erfindungsgemäßen Vorrichtung verwiesen, aus denen sich auch die das Verfahren betreffenden Merkmale ergeben. Auch hier ist wesentlich, dass durch die Optik das Licht derart verformt wird, dass die Detektionsfläche mit einem Lichtstrahlbereich nahezu konstanter Intensität möglichst vollständig bedeckt wird.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 12 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen
- Fig. 1: das von einer SPAD gemessene Spannungssignal in Abhängigkeit von der Zeit,
- Fig. 2: in einer schematischen Ansicht den grundsätzlichen Aufbau eines aus mehreren SPADs gebildeten Arrays,
- Fig. 3: eine Kennkurve eines aus dem Stand der Technik bekannten Arrays, betrieben im digitalen Messmodus,
- Fig. 4: in einer schematischer Ansicht den grundsätzlichen Aufbau eines Laser-Raster-Mikroskops, in das eine erfindungsgemäße Vorrichtung integrierbar ist,
- Fig. 5: in einer schematischer Ansicht das Profil des auf die Detektionsfläche des in Fig. 4 gezeigten Laser-Raster-Mikroskops auftreffende Licht,
- Fig. 6: in einer schematischen Ansicht das Laser-Raster-Mikroskop aus Fig. 4 mit einer erfindungsgemäßen Vorrichtung zum Detektieren von Licht gemäß einem ersten Ausführungsbeispiel,
- Fig. 7: in einer schematischen Ansicht das Laser-Raster-Mikroskop aus Fig. 4 mit einer erfindungsgemäßen Vorrichtung zum Detektieren von Licht gemäß einem zweiten Ausführungsbeispiel,
- Fig. 8: in einer schematischen Ansicht das Profil des auf die Detektionsfläche auftreffenden Lichts des Laser-Raster-Mikroskops aus Fig. 6 und Fig. 7,
- Fig. 9: in einer schematischen Ansicht das Laser-Raster-Mikroskop aus Fig. 4 mit einer erfindungsgemäßen Vorrichtung zum Detektieren von Licht gemäß einem dritten Ausführungsbeispiel,
- Fig. 10: in einer schematischen Ansicht das Profil des auf die Detektionsfläche auftreffenden Lichts des Laser-Raster-Mikroskops aus Fig. 9,
- Fig. 11: in einer schematischen Ansicht das Laser-Raster-Mikroskop aus Fig. 4 mit einer erfindungsgemäßen Vorrichtung zum Detektieren von Licht gemäß einem vierten Ausführungsbeispiel,
- Fig. 12: in einer schematischen Ansicht das Profil des auf die Detektionsfläche auftreffenden Lichts des Laser-Raster-Mikroskops aus Fig. 11,
- Fig. 13: in einer schematischen Ansicht ein fünftes Ausführungsbeispiel einer erfindungsgemäßen Vorrichtung zum Detektieren von Licht,
- Fig. 14: in einer schematischen Ansicht das Profil des auf die Detektionsfläche auftreffenden Lichts der Vorrichtung aus Fig. 13,
- Fig. 15: in einer schematischen Ansicht ein Ausführungsbeispiel eines Zeilen-Detektors,
- Fig. 16: in einer schematischen Ansicht das Laser-Raster-Mikroskop aus Fig. 4 mit einer erfindungsgemäßen Vorrichtung zum Detektieren von Licht gemäß einem sechsten Ausführungsbeispiel,
- Fig. 17: in einer schematischen Ansicht das Profil des auf die Detektionsfläche auftreffenden Lichts des Laser-Raster-Mikroskops aus Fig. 16.

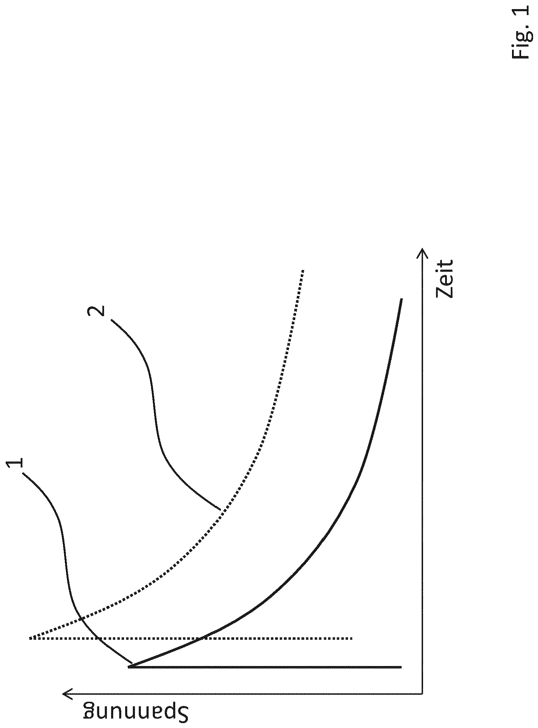

Fig. 1 zeigt das von einer SPAD gemessene Spannungssignal in Abhängigkeit von der Zeit. Anhand von Fig. 1 ist die Sättigung des Messsignals einer aus dem Stand der Technik bekannten SPAD erkennbar. Ein einzelnes Photon führt zu einer elektrischen Entladung, die in Form eines kurzen Spannungspulses 1 gemessen wird. Während einer Lawinenentladung der SPAD kann ein weiteres absorbiertes Photon keine gleichzeitige, zweite Lawine auslösen, wie dies durch den punktiert dargestellten Spannungspuls 2 angedeutet ist. Somit existiert nach einer Pulsauslösung eine Totzeit, in der die SPAD kein weiteres Licht detektieren kann.

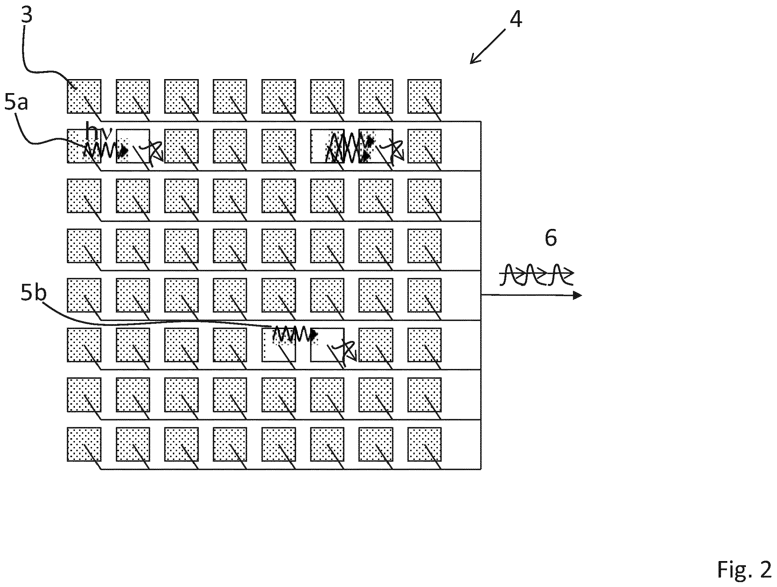

Fig. 2 zeigt in einer schematischen Ansicht den grundsätzlichen Aufbau eines aus mehreren SPADs 3 gebildeten Arrays 4. Zur besseren Darstellung ist in Fig. 2 und den folgenden Figuren lediglich ein SPAD 3 mit einem Bezugszeichen versehen. Dabei sind mehrere einzelne SPADs 3 zu einem Array 4 parallel zusammengeschaltet. Trifft ein Photon 5a auf eine einzelne SPAD 3, so ist diese aufgrund ihrer Totzeit für einige Nanosekunden nicht mehr empfindlich. Andere SPADs 3, auf die ein weiteres Photon 5b innerhalb dieser Zeit oder auch gleichzeitig auftrifft, können das Photon 5b jedoch erfassen und einen messbaren Ladungsimpuls erzeugen. Es kann so eine Pulsfolge 6 am Detektorausgang entstehen, die eine höhere Zählrate als bei einer einzelnen SPAD 3 aufweist.

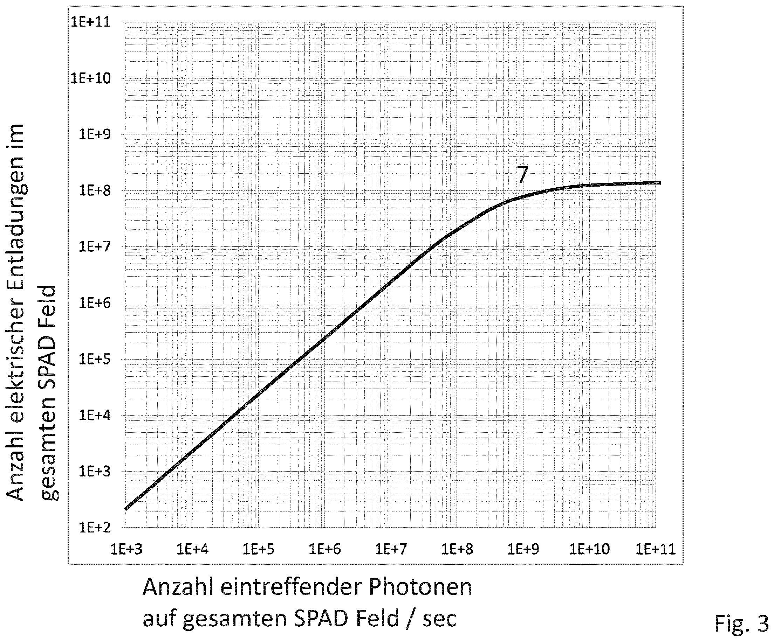

Fig. 3 zeigt eine Kennkurve 7 eines aus dem Stand der Technik bekannten Arrays 4, betrieben im digitalen Messmodus. Dabei ist im Konkreten die Anzahl der elektrischen Entladungen im gesamten SPAD-Feld (Array) gegen die Anzahl der eintreffenden Photonen auf das gesamte SPAD-Feld pro Sekunde in einer doppelt logarithmischen Skala aufgetragen. Ab ca. 10⁸ auftreffenden Photonen pro Sekunde wird die Kurve nicht-linear aufgrund des Sättigungsverhaltens. Oberhalb von etwa 10¹¹ Photonen pro Sekunde wird das Ausgangssignal (Anzahl der elektrischen Entladungen) sogar nahezu konstant, so dass eine Messung der Lichtmenge nicht mehr präzise möglich ist. Sofern die Kennkurve 7, die für ein gegebenes Detektordesign spezifisch ist, bekannt ist, kann sie durch rechnerische Korrektur linearisiert werden. Im Bereich fast vollständiger Sättigung, d.h. etwa oberhalb 10¹¹ Photonen pro Sekunde ist dies jedoch nicht mehr präzise genug möglich. Während Fig. 3 eine Kennkurve 7 für den digitalen Messmodus zeigt, gilt gleiches auch für den analogen Messmodus.

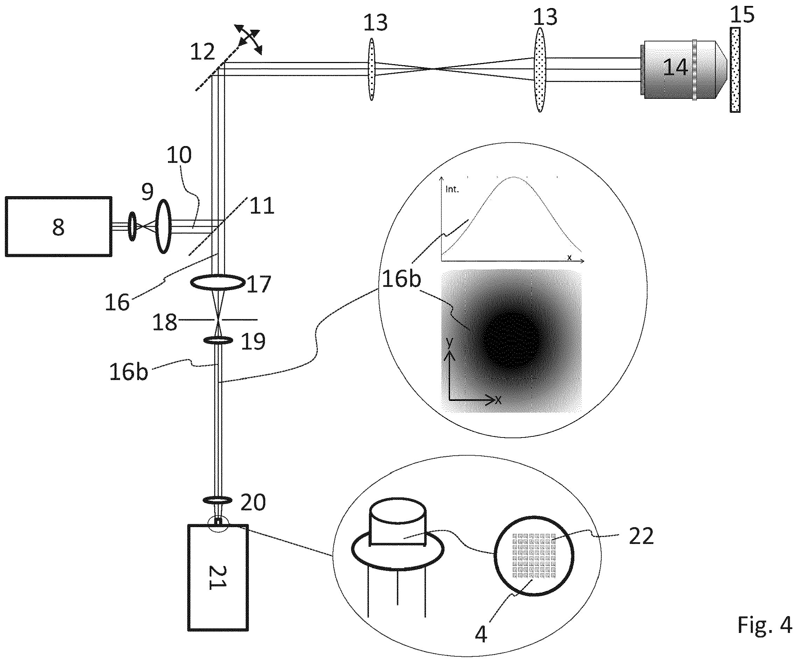

Fig. 4 zeigt in schematischer Ansicht den grundsätzlichen Aufbau eines Laser-Raster-Mikroskops, in das eine erfindungsgemäße Vorrichtung integrierbar ist. Das konfokale Laser-Raster-Mikroskop weist eine Beleuchtungslichtquelle 8, beispielsweise einen Laser, zur Emission von Licht auf. Das Licht wird durch eine Optik 9 zu einem parallelisierten Beleuchtungslichtstrahl 10 geformt, der über einen Farbstrahlteiler 11 dem Mikroskop zugeführt wird. Der Beleuchtungslichtstrahl 10 wird über eine Rastereinheit 12 abgelenkt, die den Beleuchtungslichtstrahl 10 zur bildgebenden Abtastung in zwei Raumrichtungen (X, Y) ablenken kann. Dies ist typischerweise durch kippbare Spiegel realisiert, die durch Galvanometer-Scanner oder miniaturisiert durch MEMS (microelectromechanical systems, mikroelektromechanische Systeme) realisiert sind. Oftmals werden zwei oder mehr rotierbare Spiegel als Rastereinheit 12 eingesetzt, um den Beleuchtungslichtstrahl 10 in beide Raumrichtungen rastern zu können. Der Einfachheit halber ist hier nur ein Spiegel als Rastereinheit 12 gezeigt.

Der Beleuchtungslichtstrahl 10 wird durch die Feldoptiken 13 in das Objektiv 14 abgebildet. Als Feldoptiken 13 werden üblicherweise eine erste Scanlinse und eine zweite Tubuslinse und gegebenenfalls weitere Linsen eingesetzt. Die Probe 15 wird während der Rasterbewegung der Rastereinheit 12 zweidimensional abgetastet und zu einem Zeitpunkt jeweils in einem Punkt beleuchtet, in dem der Beleuchtungslichtstrahl 10 beugungsbegrenzt abgebildet wird. In der Probe 15 kann im aktuellen Beleuchtungspunkt Fluoreszenz angeregt werden, wenn die Probe 15 mit entsprechenden Farbstoffen markiert wurde. Alternativ kann Reflexionslicht, Streulicht, Ramanstreuung, frequenzverdoppeltes Licht (SHG) oder andere Arten eines Detektionslichtstrahls 16 erzeugt werden.

Der Detektionslichtstrahl 16 läuft zumindest teilweise in genau entgegengesetzter Laufrichtung zum Beleuchtungslichtstrahl 10 den Strahlengang des Mikroskops zurück. Dabei wird der Detektionslichtstrahl 16 an der Rastereinheit 12 rückwärts abgelenkt, so dass zu jedem Zeitpunkt in jeder Ablenkrichtung der Rastereinheit 12 wieder ein feststehender Detektionslichtstrahl 16 zwischen Rastereinheit 12 und dem Detektor 21 entsteht. Der Detektionslichtstrahl 16 wird durch eine Optik 17 auf eine Lochblende 18 abgebildet.

Die Lochblende 18 ist konfokal, also optisch kongruent zum Fokus des Beleuchtungslichtstrahls 10 in der Probe angeordnet. Auf diese Weise kann Licht, das aus dem Fokus des Beleuchtungslichtstrahls 10 in der Probe 15 stammt, die konfokale Lochblende 18 passieren, während Licht, das von Orten außerhalb des Fokus stammt, unterdrückt wird. Diese konfokale Detektion ermöglicht Streulichtunterdrückung und eine dreidimensionale Abtastung der Probe 15 zur dreidimensionalen Bildgebung.

Der die Lochblende 18 passierende Detektionslichtstrahl 16b wird an der Lochblende 18 optisch gebeugt und divergiert. Eine Linse 19 parallelisiert den Detektionslichtstrahl 16b und führt ihn einem Detektor 21 zu. Die Detektionsfläche 22 des Detektors 21 ist ein Array 4 aus SPADs 3 gemäß Fig. 2. Auf das Array 4 kann der Detektionslichtstrahl 16b durch weitere Linsen 20 abgebildet werden.

Sofern die Lochblende 18 rund ist, weist der Detektionslichtstrahl 16b auf der Detektionsfläche 22 eine Verteilung auf, die einer Airy-Verteilung entspricht. Bei eckigen, schlitzförmigen oder anderen Formen der Lochblende 18 werden entsprechend andere Beugungsmuster auf der Detektionsfläche 22 abgebildet. Typischerweise beschreibt eine Gauß-Verteilung das Beugungsmuster des Detektionslichtstrahls 16b auf der Detektionsfläche 22 ausreichend genau. Es kommt für die vorliegende Erfindung nicht auf die exakte Form des Beugungsmusters an, sondern nur auf deren Eigenschaft, dass eine ausreichend homogene Beleuchtung der Detektionsfläche 22 des Arrays 4 nicht ohne weitere Maßnahmen gegeben ist.

Bei dem in Fig. 4 gezeigten Mikroskop wird der Detektionslichtstrahl 16b auf das Array 4 beispielsweise mit gaußförmigem Profil abgebildet und führt vergleichsweise früh zu einer Sättigung des Detektors 21, wie bereits im allgemeinen Teil der Beschreibung ausgeführt.

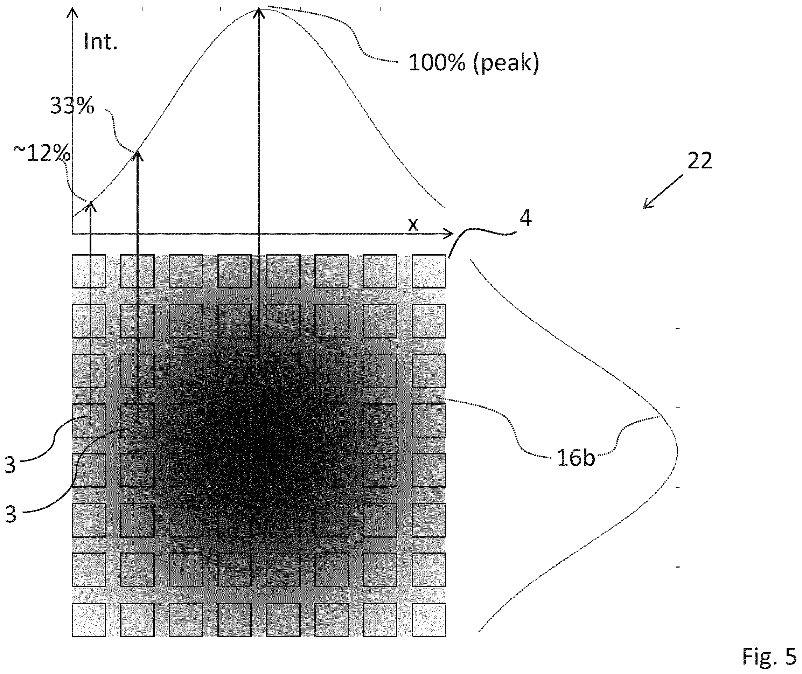

Fig. 5 zeigt in schematischer Ansicht das auf die Detektionsfläche 22 des in Fig. 4 gezeigten Laser-Raster-Mikroskops auftreffenden Detektionslichtstrahls. Die Detektionsfläche 22 wird durch das Array 4 gebildet. Dabei werden beispielsweise die im Randbereich angeordneten SPADs 3 des Arrays 4 mit weniger als 10% der Zentralintensität beleuchtet. Die nächste, weiter innen liegende SPAD 3 wird ebenfalls nur mit etwa 33% der Zentralintensität beleuchtet. Daher werden die inneren SPADs 3 deutlich früher einen Sättigungseffekt nach Art der in Fig. 3 gezeigten Kennkurve 7 zeigen, als außen liegende SPADs 3.

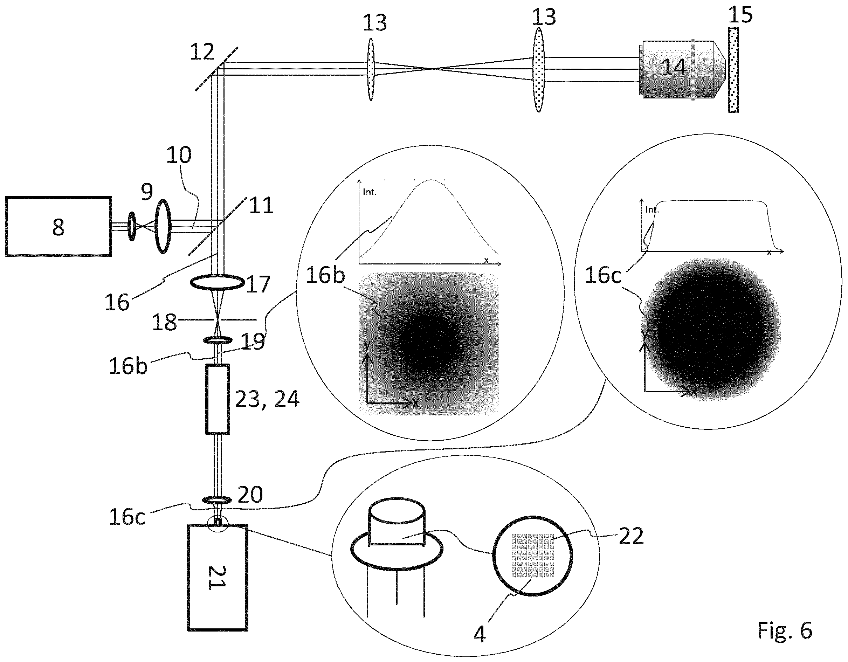

Fig. 6 zeigt in einer schematischen Ansicht das Laser-Raster-Mikroskop aus Fig. 4 mit einer erfindungsgemäßen Vorrichtung zum Detektieren von Licht gemäß einem ersten Ausführungsbeispiel. Das in Fig. 6 gezeigte Laser-Raster-Mikroskop weißt eine erfindungsgemäße Optik 23 zwischen der konfokalen Lochblende 18 und dem Detektor 21 auf. Im hier gezeigten Ausführungsbeispiel handelt es sich um eine Flat-Top-Optik 24, wie sie für Anwendungen in der Laser-Materialbearbeitung eingesetzt wird. Der Detektionslichtstrahl 16b wird durch die Flat-Top-Optik 24 derart verformt, dass die Detektionsfläche 22 mit einem Lichtstrahlbereich nahezu konstanter Intensität möglichst vollständig bedeckt ist. Der entsprechend verformte Detektionslichtstrahl 16c ist in Fig. 6 vergrößert dargestellt.

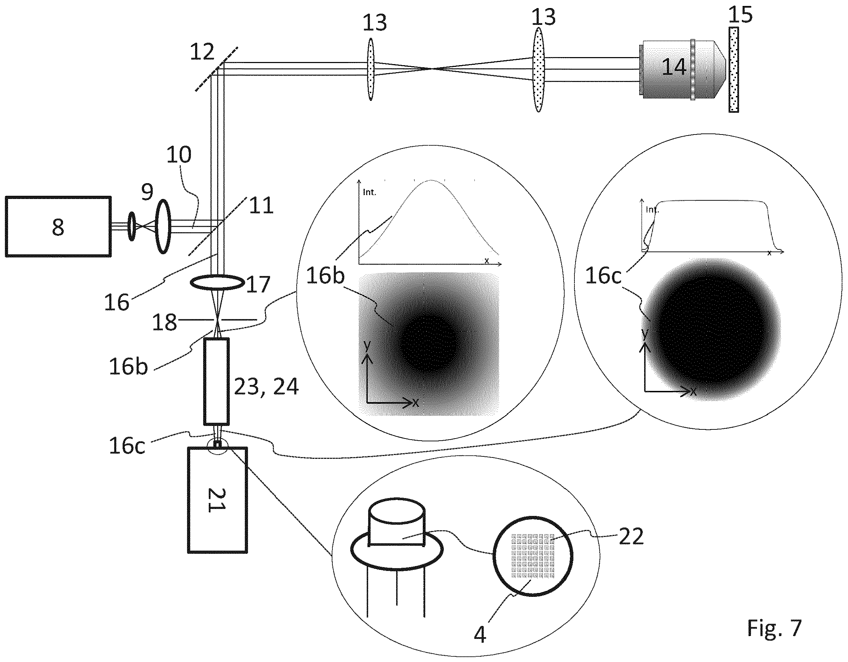

Fig. 7 zeigt in einer schematischen Ansicht das Laser-Raster-Mikroskop aus Fig. 4 mit einer erfindungsgemäßen Vorrichtung zum Detektieren von Licht gemäß einem zweiten Ausführungsbeispiel. In diesem Ausführungsbeispiel ist die Optik 23 ebenfalls als Flat-Top-Optik 24 realisiert und zusätzlich derart ausgebildet, dass sie die Funktion der in Fig. 4 gezeigten Linse 19 und/oder Linsen 20 übernimmt. Auch andere im Detail abweichende oder mit weiteren Funktionen erweiterte Strahlengänge sind möglich. Beispielsweise können Elemente zur spektralen Aufteilung des Detektionslichtstrahls 16 in mehrere TeilStrahlengänge bei Verwendung mehrerer erfindungsgemäßer Anordnungen aus Optiken 23 und Detektoren 21 vorhanden sein. Wichtig ist lediglich die Umformung vor den Detektoren 21, so dass die Detektionsflächen 22 der Detektoren 21 mit einem Lichtstrahlbereich nahezu konstanter Intensität möglichst vollständig bedeckt sind.

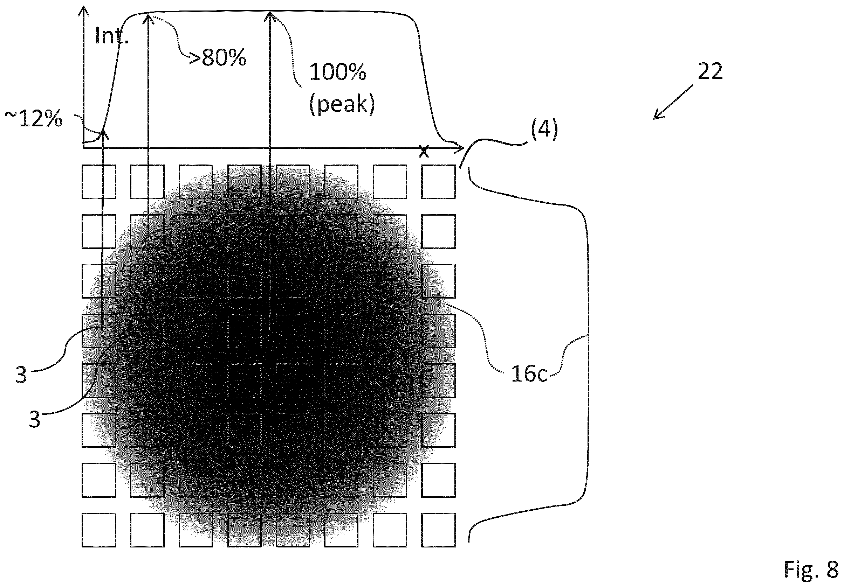

Fig. 8 zeigt in einer schematischen Ansicht das Profil des auf die Detektionsfläche 22 auftreffenden Lichts 16c eines Laser-Raster-Mikroskops aus Fig. 6 und Fig. 7. Dabei ist deutlich erkennbar, dass die Detektionsfläche 22 bzw. das Array 4 derart dimensioniert ist, dass der Detektionslichtstrahl 16c, welcher eine nahezu konstante Intensität aufweist, die Detektionsfläche 22 bzw. das Array 4 möglichst vollständig abdeckt.

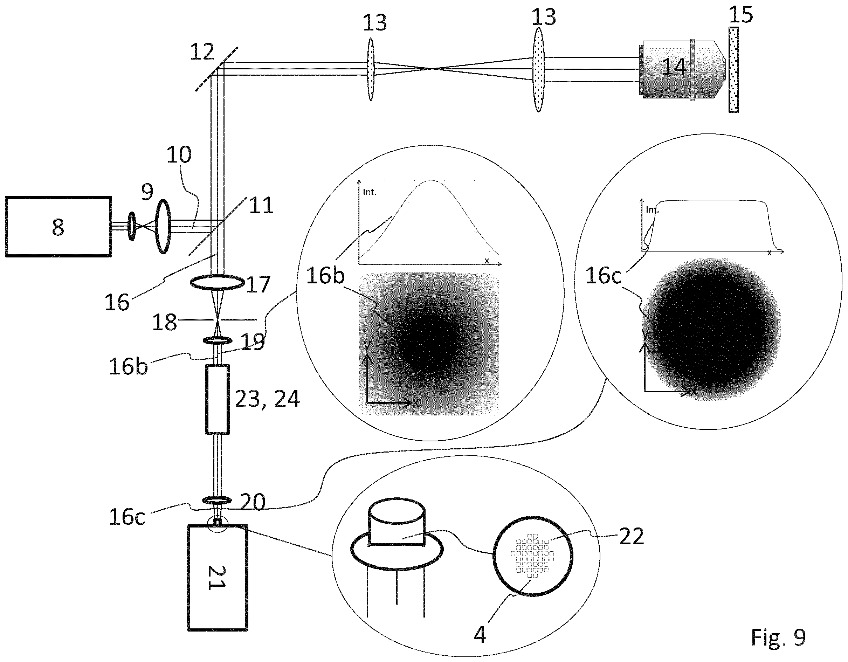

Fig. 9 zeigt in einer schematischen Ansicht das Laser-Raster-Mikroskop aus Fig. 4 mit einer erfindungsgemäßen Vorrichtung zum Detektieren von Licht gemäß einem dritten Ausführungsbeispiel. Im Gegensatz zu den Ausführungsbeispielen gemäß Fig. 6 und 7 sind die SPADs 3 in Fig. 9 derart angeordnet, dass die Detektionsfläche 22 zumindest annähernd eine runde Form aufweist. Im Gegensatz zu der in Fig. 6 und 7 gezeigten Detektionsfläche 22 sind nunmehr keine unbeleuchteten bzw. nur wenig beleuchteten SPADs 3 vorhanden, die zum Rauschen des Detektors 21 beitragen. Vielmehr ist die Detektionsfläche 22 optimal an das Strahlprofil 16c angepasst.

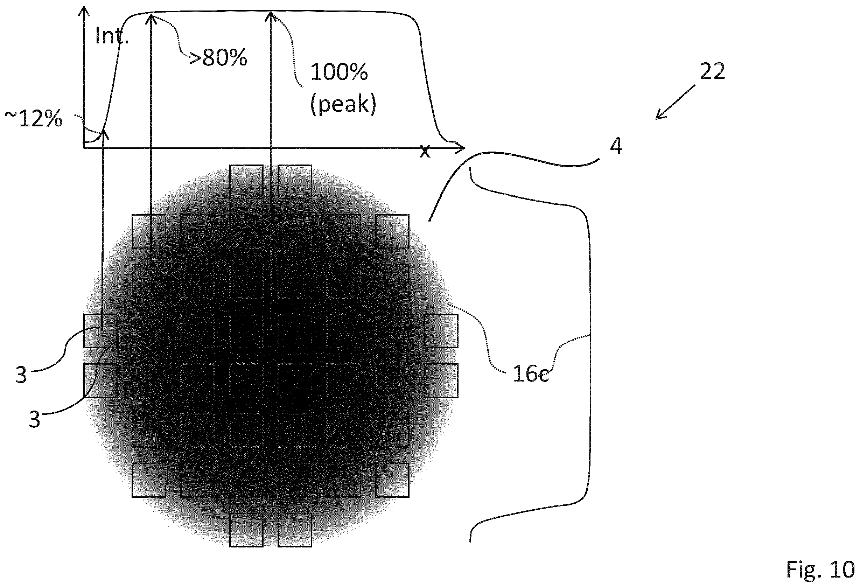

Fig. 10 zeigt in einer schematischen Ansicht das Profil des auf die Detektionsfläche 22 auftreffenden Lichts 16c eines Laser-Raster-Mikroskops aus Fig. 9. Zur Vermeidung von Wiederholungen wird an dieser Stelle auf die Ausführungen zu Fig. 9 verwiesen.

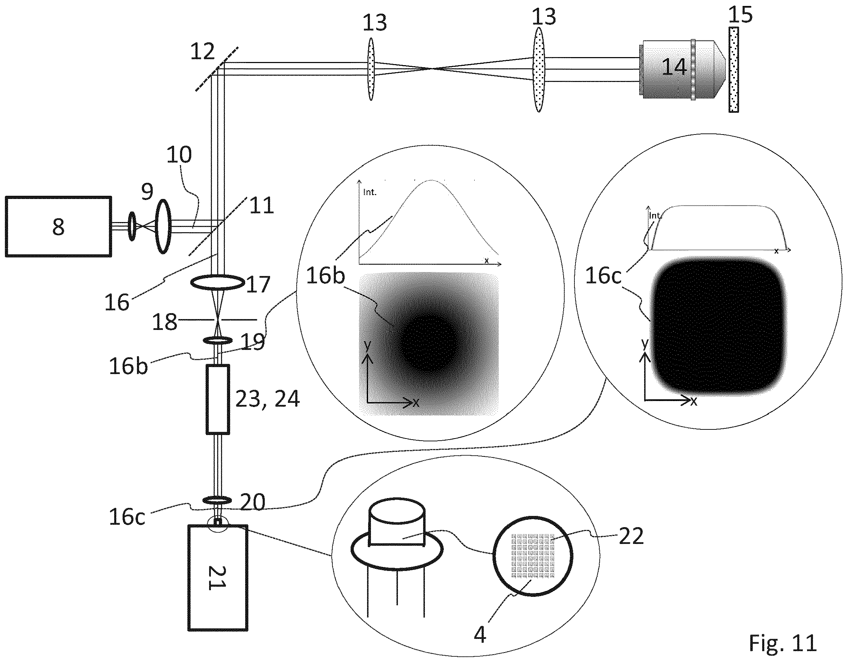

Fig. 11 zeigt in einer schematischen Ansicht das Laser-Raster-Mikroskop aus Fig. 4 mit einer erfindungsgemäßen Vorrichtung zum Detektieren von Licht gemäß einem vierten Ausführungsbeispiel. Dabei ist die Detektionsfläche 22 des Detektors 21 quadratisch ausgebildet, entspricht somit den meisten kommerziell erhältlichen Arrays 4. Um eine bestmögliche Anpassung des Profils des Detektionslichtstrahls 16c zu erreichen, ist die als Flat-Top-Optik 24 ausgeführte Optik 23 derart ausgebildet, dass sie ein nahezu quadratisches Profil erzeugt. Eine entsprechende Flat-Top-Optik 24 wird beispielsweise von der Firma TOPAG Lasertechnik GmbH (Darmstadt) hergestellt und ist in Stefan Rung et al., Proceedings SPIE Photonics West 2014, LASE, LAMON XIX, "Laser Thin Film Ablation with Multiple Beams and Tailored Beam Profiles", Paper 8967-24 beschrieben.

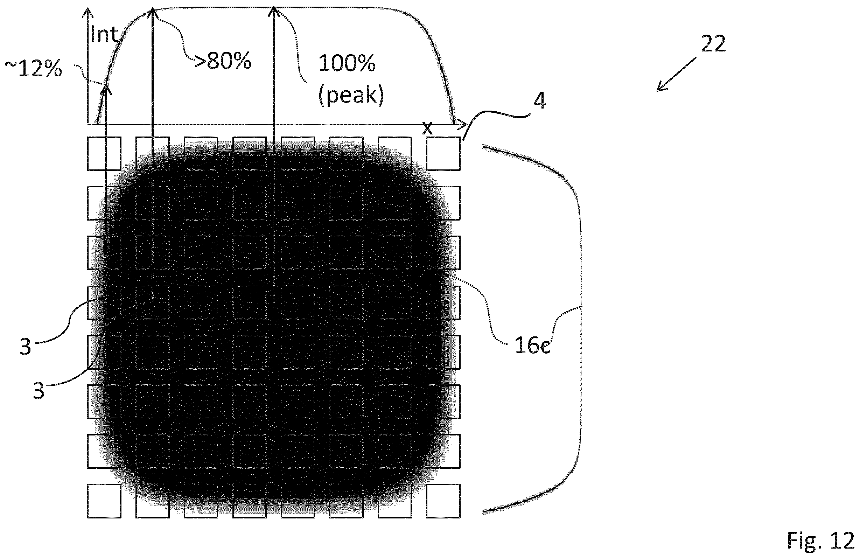

In Fig. 12 ist nochmals das Profil des auf die Detektionsfläche 22 auftreffenden Lichts 16c eines Laser-Raster-Mikroskops aus Fig. 10 in einer vergrößerten Ansicht dargestellt.

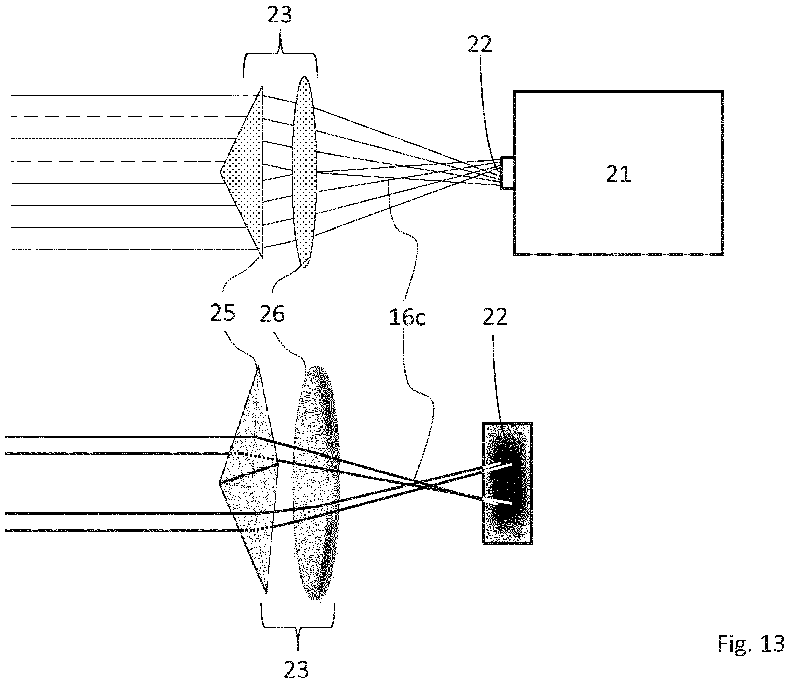

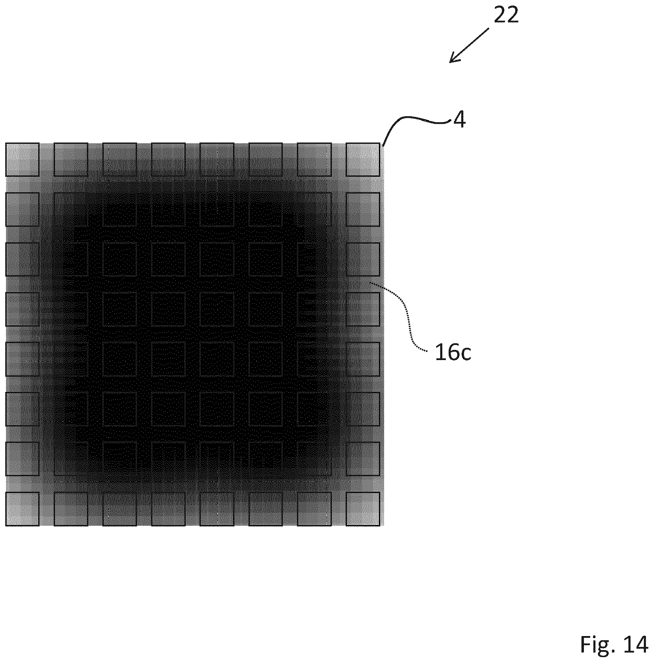

Fig. 13 zeigt in einer schematischen Ansicht ein fünftes Ausführungsbeispiel einer erfindungsgemäßen Vorrichtung zum Detektieren von Licht. Aus Fig. 13 geht deutlich hervor, dass die Optik 23 aus einem pyramidenförmigen Bauteil 25 und eine fokussierende Linse 26 aufgebaut ist. Durch diese Anordnung entstehen vier gaußartige Profile des Detektionslichtstrahls 16c nach Art eines vierblättrigen Kleeblatts auf der Detektionsfläche 22 des Detektors 21. Durch eine geeignete Wahl der Dimensionierung des pyramidenförmigen Bauteils 25, der fokussierenden Linse 26 und der Detektionsfläche 22 kann eine quadratische Detektionsfläche 22 homogen bis in die Ecken ausgeleuchtet werden. Eine entsprechend erzeugte Lichtverteilung auf einer Detektionsfläche 22 ist beispielhaft in Fig. 14 gezeigt.

Dabei kann die Reihenfolge des pyramidenförmigen Bauteils 25 und der fokussierenden Linse 26 vertauscht werden. Des Weiteren kann ein an die Form der Detektionsfläche 22 und an den Optikstrahlengang angepasstes polyederförmiges Bauteil anstelle des pyramidenförmigen Bauteils 25 eingesetzt werden. Wesentlich ist lediglich, dass aus einer Vielzahl kleiner Gaußprofile ein Gesamtprofil erzeugt wird, das die Detektionsfläche 22 möglichst homogen erfasst.

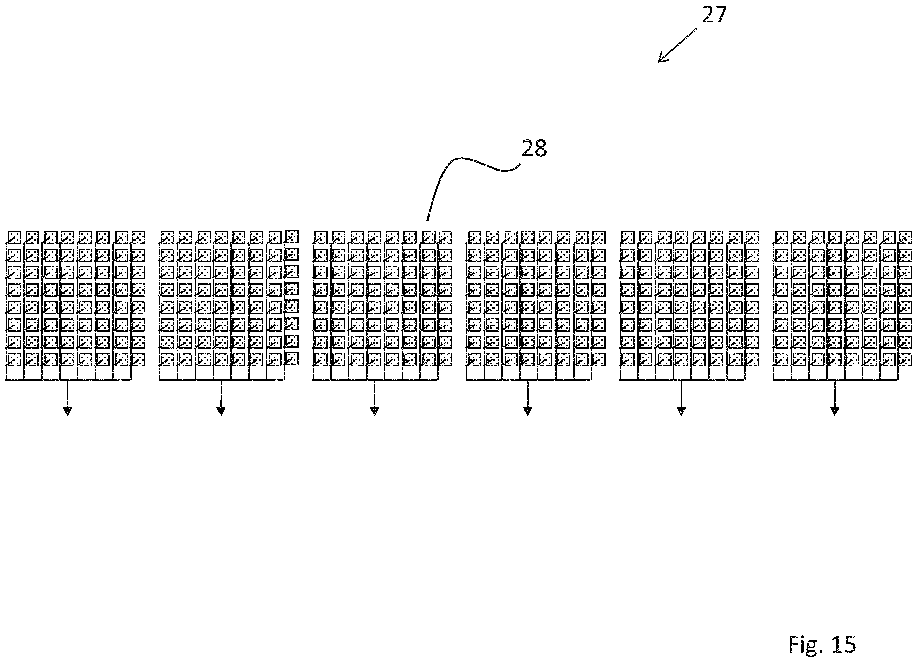

Fig. 15 zeigt in einer schematischen Ansicht ein Ausführungsbeispiel eines Zeilen-Detektors 27. Bei dem in Fig. 15 gezeigten Zeilendetektor 27 sind mehrere Arrays 4, die alle für sich bereits aus mehreren parallelen SPADs 3 bestehen, zu einer Detektor-Zeile 28 zusammengesetzt, die mehrere Signal-Ausgänge aufweist. Somit kann ortsaufgelöst der Detektionslichtstrahl 16c erfasst werden. Entsprechende Zeilen-Detektoren 27 werden beispielsweise zur Detektion von spektral aufgespaltenem Licht in einem Spektrometer verwendet.

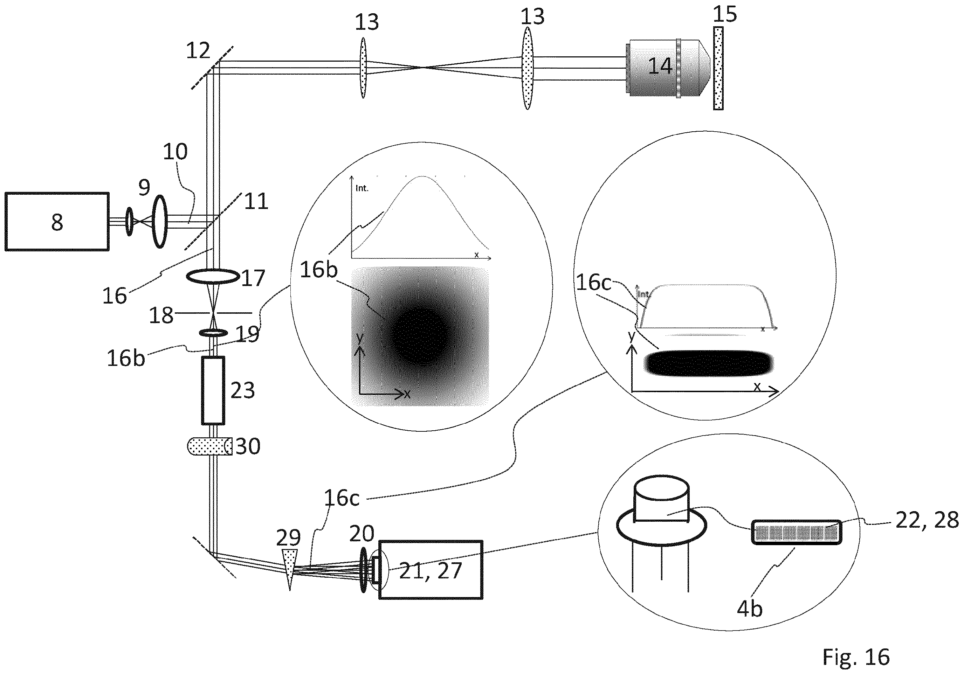

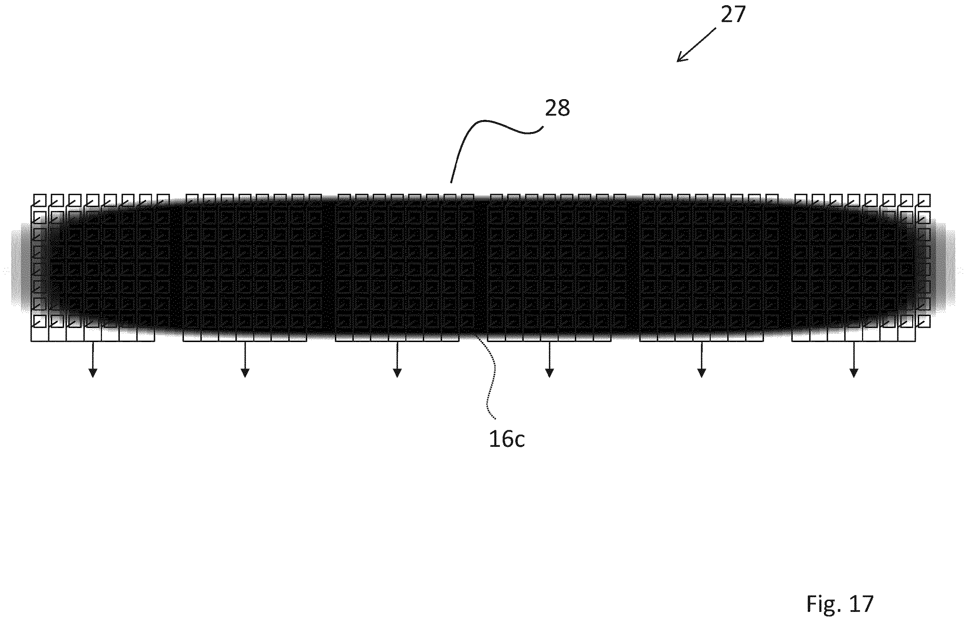

Fig. 16 zeigt in einer schematischen Ansicht das Laser-Raster-Mikroskop aus Fig. 4 mit einer erfindungsgemäßen Vorrichtung zum Detektieren von Licht gemäß einem sechsten Ausführungsbeispiel. Dabei ist der Detektor 21 als Zeilen-Detektor 27 gemäß Fig. 15 ausgebildet. Des Weiteren ist zusätzlich zu der Optik 22 ein dispersives Element 29 (z.B. ein Prisma oder ein Gitter) und eine Zylinderlinse 30 vor dem Detektor 21 angeordnet. Die Zylinderlinse 30 oder das dispersive Element 29 oder eine Kombination aus beiden können in Verbindung mit einer Optik 23 den Detektionslichtstrahl 16c derart verformen, dass eine homogenisierte Ausleuchtung der Detektor-Zeile 28 des Zeilen-Detektors 27 realisiert ist. Eine entsprechend ausgeleuchtete Detektor-Zeile 28 eines Zeilen-Detektors 27 ist in Fig. 17 vergrößert dargestellt. Die homogenisierte Ausleuchtung mit dem Detektionslichtstrahl 16c stellt dann ein flaches Linienprofil dar, das relativ scharfe Kanten und eine homogene Intensitätsverteilung im inneren Bereich des Linienprofils aufweist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

## Patentansprüche

1. Vorrichtung zum Detektieren von Licht (16, 16b, 16c) zur Anwendung in einem Mikroskop, mit einer konfokalen Lochblende (18) und Mitteln zur Erzeugung eines Beleuchtungslichtstrahls zur Beleuchtung einer Probe (15) unter Erzeugung eines Detektionslichtstrahls (16), der auf die konfokale Lochblende (18) abgebildet wird, und mit mindestens einem Silicium-Photomultiplier (SiPM) und einer Optik (23), wobei der Silicium-Photomultiplier (SiPM) eine aus einem Array (4) mehrerer Single-Photon-Avalanche-Dioden (SPAD) (3) gebildete Detektionsfläche (22) aufweist, **dadurch gekennzeichnet, dass** die Optik (23) als Flat-Top-Optik (24) ausgebildet ist, die das Licht derart formt, dass die Detektionsfläche (22) mit einem Lichtstrahlbereich konstanter Intensität vollständig bedeckt ist, und dass die Flat-Top-Optik zwischen der konfokalen Lochblende (18) und dem Silicium-Photomultiplier (SiPM) angeordnet ist.

2. Vorrichtung nach Anspruch 1, **dadurch gekennzeichnet, dass** die Flat-Top-Optik (24) als diffraktive Optik, beispielsweise als Beugungsgitter, oder als refraktive Optik, beispielsweise umfassend mindestens eine asphärische Linse und/oder mindestens eine Freiformlinse, oder als Reflexionsoptik, beispielsweise als nicht-sphärischer Spiegel, ausgebildet ist.

3. Vorrichtung nach Anspruch 2, **dadurch gekennzeichnet, dass** die Flat-Top-Optik (24) eine erste Linse und eine zweite Linse aufweist, dass die erste Linse und/oder die zweite Linse als asphärische Linse oder als Freiformlinse ausgebildet sind und dass die erste Linse ein radiales Profil des Lichts verzerrt und die zweite Linse das Licht kollimiert.

4. Vorrichtung nach Anspruch 1, **dadurch gekennzeichnet, dass** die Flat-Top-Optik (24) ein Mikrolinsenarray beinhaltet.

5. Vorrichtung nach einem der Ansprüche 2 bis 4, **dadurch gekennzeichnet, dass** mindestens eine Linse oder Mikrolinse der Flat-Top-Optik (24) auf einer Linsenoberfläche eine, vorzugsweise spektral breitbandige, Antireflexionsschicht aufweist.

6. Vorrichtung nach Anspruch 1, **dadurch gekennzeichnet, dass** die Optik (23) ein pyramidenförmiges oder polyederförmiges Bauteil (25), insbesondere einen Glasblock oder einen Polymerblock, und eine fokussierende Linse (26) beinhaltet.

7. Vorrichtung nach einem der Ansprüche 1 bis 6, **dadurch gekennzeichnet, dass** die Optik (23) das Licht (16, 16b, 16c) derart formt, dass der Bereich nahezu konstanter Intensität eine nahezu runde oder nahezu rechteckige, insbesondere nahezu quadratische, Form aufweist.

8. Vorrichtung nach einem der Ansprüche 1 bis 7, **dadurch gekennzeichnet, dass** die SPADs (3) derart ausgebildet und/oder angeordnet sind, dass die Detektionsfläche (22) eine runde oder zumindest annähernd runde Form aufweist.

9. Vorrichtung nach einem der Ansprüche 1 bis 7, **dadurch gekennzeichnet, dass** die SPADs (3) derart ausgebildet und/oder angeordnet sind, dass die Detektionsfläche (22) eine rechteckige, insbesondere eine quadratische, Form aufweist.

10. Vorrichtung nach einem der Ansprüche 1 bis 7, **dadurch gekennzeichnet, dass** der Silicium-Photomultiplier (SiPM) als Zeilen-Detektor (27) ausgebildet ist, wobei der Zeilen-Detektor (27) mindestens zwei einzelnen Arrays (4) aus mehreren SPADs (3) mit jeweils mindestens zwei Signal-Ausgängen umfasst.

11. Vorrichtung nach Anspruch 10, **dadurch gekennzeichnet, dass** zwischen der Optik (23) und dem Zeilen-Detektor (27) ein dispersives Element (29), beispielsweise ein Prisma, und/oder eine Zylinderlinse (30) angeordnet ist.

12. Mikroskop, insbesondere Rastermikroskop, vorzugsweise Laser-Raster-Mikroskop, **gekennzeichnet durch** eine Vorrichtung zur Detektion von Licht (16, 16b, 16c) nach einem der Ansprüche 1 bis 11.

13. Mikroskop nach Anspruch 12, **dadurch gekennzeichnet, dass** es sich um ein Mikroskop zur Fluoreszenz-Mikroskopie und/oder zur SHG-Mikroskopie und/oder zur Raman-Mikroskopie handelt.

14. Verfahren zum Detektieren von Licht (16, 16b, 16c) zur Anwendung in einem Mikroskop unter Nutzung einer Vorrichtung zum Detektieren von Licht (16, 16b, 16c) nach einem der Ansprüche 1 bis 11.

## Claims

1. Apparatus for detecting light (16, 16b, 16c) for use in a microscope, having a confocal pinhole aperture (18) and means for producing an illumination light beam for illuminating a sample (15) while producing a detection light beam (16) that is imaged onto the confocal pinhole aperture (18), and having at least one silicon photomultiplier (SiPM) and an optical unit (23), wherein the silicon photomultiplier (SiPM) has a detection surface (22) formed from an array (4) of a plurality of single photon avalanche diodes (SPAD) (3), **characterized in that** the optical unit (23) is embodied in the form of a flat-top optical unit (24) that shapes the light such that the detection surface (22) is entirely covered with a light beam region of constant intensity, and **in that** the flat-top optical unit is arranged between the confocal pinhole aperture (18) and the silicon photomultiplier (SiPM).

2. Apparatus according to Claim 1, **characterized in that** the flat-top optical unit (24) is embodied in the form of a diffractive optical unit, for example a diffraction grating, or of a refractive optical unit, for example comprising at least one aspheric lens and/or at least one freeform lens, or in the form of a reflection optical unit, for example a non-spherical mirror.

3. Apparatus according to Claim 2, **characterized in that** the flat-top optical unit (24) has a first lens and a second lens, **in that** the first lens and/or the second lens are embodied in the form of an aspheric lens or of a freeform lens, and **in that** the first lens distorts a radial profile of the light and the second lens collimates the light.

4. Apparatus according to Claim 1, **characterized in that** the flat-top optical unit (24) includes a microlens array.

5. Apparatus according to one of Claims 2 to 4, **characterized in that** at least one lens or microlens of the flat-top optical unit (24) has a, preferably spectrally broadband, anti-reflective layer on a lens surface.

6. Apparatus according to Claim 1, **characterized in that** the optical unit (23) includes a pyramidal or polyhedral component (25), in particular a glass block or a polymer block, and a focusing lens (26).

7. Apparatus according to one of Claims 1 to 6, **characterized in that** the optical unit (23) shapes the light (16, 16b, 16c) in a manner such that the region of nearly constant intensity has a nearly round or nearly rectangular, in particular nearly square, shape.

8. Apparatus according to one of Claims 1 to 7, **characterized in that** the SPADs (3) are configured and/or arranged such that the detection surface (22) has a round or at least approximately round shape.

9. Apparatus according to one of Claims 1 to 7, **characterized in that** the SPADs (3) are configured and/or arranged such that the detection surface (22) has a rectangular, in particular square, shape.

10. Apparatus according to one of Claims 1 to 7, **characterized in that** the silicon photomultiplier (SiPM) is embodied in the form of a line detector (27), wherein the line detector (27) comprises at least two individual arrays (4) of a plurality of SPADs (3) with in each case at least two signal outputs.

11. Apparatus according to Claim 10, **characterized in that** a dispersive element (29), for example a prism, and/or a cylindrical lens (30) is arranged between the optical unit (23) and the line detector (27).

12. Microscope, in particular scanning microscope, preferably laser scanning microscope, **characterized by** an apparatus for detecting light (16, 16b, 16c) according to one of Claims 1 to 11.

13. Microscope according to Claim 12, **characterized in that** the microscope is a microscope for fluorescence microscopy and/or for SHG microscopy and/or for Raman microscopy.

14. Method for detecting light (16, 16b, 16c) for application in a microscope with the use of an apparatus for detecting light (16, 16b, 16c) according to one of Claims 1 to 11.

## Revendications

1. Dispositif de détection de lumière (16, 16b, 16c) destiné à être utilisé dans un microscope, comprenant un diaphragme à trou (18) confocal et des moyens servant à générer un rayon lumineux d'éclairage destiné à éclairer un échantillon (15) en générant un rayon lumineux de détection (16), lequel est représenté sur le diaphragme à trou (18) confocal, et comprenant au moins un photomultiplicateur en silicium (SiPM) et une optique (23), le photomultiplicateur en silicium (SiPM) possédant une surface de détection (22) formée par un réseau (4) de plusieurs diodes à avalanche à photon unique (SPAD) (3), **caractérisé en ce que** l'optique (23) est réalisée sous la forme d'une optique à sommet plat (24) qui façonne la lumière de telle sorte que la surface de détection (22) est entièrement recouverte par une région de rayon lumineux ayant une intensité constante, et **en ce que** l'optique à sommet plat est disposée entre le diaphragme à trou (18) confocal et le photomultiplicateur en silicium (SiPM).

2. Dispositif selon la revendication 1, **caractérisé en ce que** l'optique à sommet plat (24) est réalisée sous la forme d'une optique diffractive, par exemple sous la forme d'un réseau de diffraction, ou sous la forme d'une optique réfractive, par exemple comprenant au moins une lentille asphérique et/ou au moins une lentille de forme libre, ou sous la forme d'une optique de réflexion, par exemple sous la forme d'un miroir non sphérique.

3. Dispositif selon la revendication 2, **caractérisé en ce que** l'optique à sommet plat (24) possède une première lentille et une deuxième lentille, **en ce que** la première lentille et/ou la deuxième lentille sont réalisées sous la forme de lentilles asphériques ou sous la forme de lentilles à forme libre et **en ce que** la première lentille déforme un profil radial de la lumière et la deuxième lentille collimate la lumière.

4. Dispositif selon la revendication 1, **caractérisé en ce que** l'optique à sommet plat (24) contient un réseau de microlentilles.

5. Dispositif selon l'une des revendications 2 à 4, **caractérisé en ce qu'**au moins une lentille ou une microlentille de l'optique à sommet plat (24) possède, sur une surface de lentille, une couche antiréflexion de préférence à large bande spectrale.

6. Dispositif selon la revendication 1, **caractérisé en ce que** l'optique (23) contient un élément structural (25) en forme de polyèdre ou de pyramide, notamment un bloc en verre ou un bloc en polymère, et une lentille de focalisation (26).

7. Dispositif selon l'une des revendications 1 à 6, **caractérisé en ce que** l'optique (23) façonne la lumière (16, 16b, 16c) de telle sorte que la zone d'intensité quasiment constante présente une forme quasiment ronde ou quasiment rectangulaire, notamment quasiment carrée.

8. Dispositif selon l'une des revendications 1 à 7, **caractérisé en ce que** les SPAD (3) sont configurées et/ou disposées de telle sorte que la surface de détection (22) présente une forme ronde ou au moins approximativement ronde.

9. Dispositif selon l'une des revendications 1 à 7, **caractérisé en ce que** les SPAD (3) sont configurées et/ou disposées de telle sorte que la surface de détection (22) présente une forme rectangulaire, notamment une forme carrée.

10. Dispositif selon l'une des revendications 1 à 7, **caractérisé en ce que** le photomultiplicateur en silicium (SiPM) est réalisé sous la forme d'un détecteur linéaire (27), le détecteur linéaire (27) comportant au moins deux réseaux (4) individuels de plusieurs SPAD (3) ayant respectivement au moins deux sorties de signal.

11. Dispositif selon la revendication 10, **caractérisé en ce qu'**entre l'optique (23) et le détecteur linéaire (27) est disposé un élément dispersif (29), par exemple un prisme, et/ou une lentille cylindrique (30).

12. Microscope, notamment microscope à balayage, de préférence microscope à balayage laser, **caractérisé par** un dispositif de détection de lumière (16, 16b, 16c) selon l'une des revendications 1 à 11.

13. Microscope selon la revendication 12, **caractérisé en ce qu'**il s'agit d'un microscope destiné à la microscopie à fluorescence et/ou à la microscopie GSH et/ou la microscopie Raman.

14. Procédé de détection de lumière (16, 16b, 16c) destiné à être utilisé dans un microscope en utilisant un dispositif de détection de lumière (16, 16b, 16c) selon l'une des revendications 1 à 11.
